# EUROPÄISCHE PATENTSCHRIFT

(11) **EP 3 036 387 B1**
(45) Veröffentlichungstag und Bekanntmachung des Hinweises auf die Patenterteilung: **29.05.2019**
(21) Anmeldenummer: 14753265.9
(22) Anmeldetag: 22.08.2014
(51) Int. Cl.: E05B 47/00, E05B 81/06, H02K 26/00, H02K 37/12, E05B 81/16, E05B 81/30, E05B 81/42

(54) **KRAFTFAHRZEUGSCHLOSS**
MOTOR VEHICLE LOCK
SERRURE DE VÉHICULE AUTOMOBILE

(30) Priorität: 23.08.2013 DE 102013109165
(43) Veröffentlichungstag der Anmeldung: 29.06.2016
(73) Patentinhaber: Brose Schliesssysteme GmbH & Co. KG, 42369 Wuppertal (DE)
(72) Erfinder: REINERT, Jörg, 42899 Remscheid (DE); PSZOLA, Peter, 53123 Bonn (DE); KLINGLER, Christian, 97277 Neubrunn (DE); KOCH, Matthias, 97297 Waldbüttelbrunn (DE)
(74) Vertreter: Gottschald, Jan
(86) Internationale Anmeldenummer: PCT/EP2014/067899
(87) Internationale Veröffentlichungsnummer: WO 2015/025033

(56) Entgegenhaltungen:
- EP-A1- 0 175 903
- EP-A2- 1 372 241
- WO-A1-2009/040074
- DE-A1-102008 012 563
- US-A- 6 020 804

## Beschreibung

Die Erfindung betrifft ein Kraftfahrzeugschloss gemäß dem Oberbegriff von Anspruch 1 sowie ein Verfahren zur Ansteuerung eines solchen Kraftfahrzeugschlosses gemäß dem Oberbegriff von Anspruch 13.

Das in Rede stehende Kraftfahrzeugschloss findet Anwendung bei allen Arten von Verschlusselementen eines Kraftfahrzeugs. Dazu gehören insbesondere Seitentüren, Hecktüren, Heckklappen, Heckdeckel oder Motorhauben. Diese Verschlusselemente können grundsätzlich auch nach Art von Schiebetüren ausgestaltet sein.

Heutige Kraftfahrzeugschlösser sind mit einer ganzen Reihe von Funktionen ausgestattet, die mittels elektrischer Antriebe motorisch auslösbar sind. Dabei sind eine möglichst hohe Kompaktheit einerseits und möglichst geringe Kosten andererseits von besonderer Bedeutung.

Das bekannte Kraftfahrzeugschloss (DE 10 2008 012 563 A1), von dem die Erfindung ausgeht, weist einen Antrieb für ein verstellbares Funktionselement auf, der nach Art eines Direktantriebs ausgestaltet ist. Nachteilig bei dem dortigen Direktantrieb ist allerdings dessen geringer Wirkungsgrad und dessen wenig optimales Drehmomentverhalten.

Der Erfindung liegt das Problem zugrunde, dass der Wirkungsgrad des dortigen Antriebs erhöht und dessen Drehmomentverhalten optimiert wird.

Das obige Problem wird bei einem Kraftfahrzeugschloss gemäß dem Oberbegriff von Anspruch 1 durch die Merkmale des kennzeichnenden Teils von Anspruch 1 gelöst.

Das vorschlagsgemäße Kraftfahrzeugschloss ist mit einem um eine Stellelementachse verstellbaren, als Steuerwelle ausgestalteten Stellelement und einem Antrieb zur Verstellung des Stellelements ausgestattet, wobei der Antrieb einen dem Stellelement zugeordneten Rotor mit einer Permanentmagnetanordnung und einem Ständer mit einer Spulenanordnung aus mindestens zwei Spulen aufweist.

Wesentlich ist die grundsätzliche Überlegung, dass sich mit der Führung des von der Spulenanordnung erzeugten Magnetfelds über magnetleitende Pole, von denen mindestens ein Pol bis auf einen bezogen auf die Stellelementachse axialen Spalt an eine Stirnseite des Rotors heranreicht, besonders gute Wirkungsgrade und hohe Drehmomente bei kompakter Bauweise realisieren lassen. Solche Pole werden allgemeinhin auch als "Zähne" bezeichnet.

Zur Auslegung des Begriffs "Stirnseite des Rotors" wird davon ausgegangen, dass ein Rotor stets eine um die Rotorachse umlaufende Umfangsseite und zwei in entgegengesetzte Richtungen weisende Stirnseiten aufweist. Bei einem zylindrischen Rotor handelt es sich bei der Umfangsseite um eine Zylindermantelfläche und bei den beiden Stirnseiten um Kreisflächen, die senkrecht zu der Rotorachse ausgerichtet sind. Mit dem Begriff "axialer Spalt" ist hier gemeint, dass der Spalt eine Entfernung in bezogen auf die Stellelementachse axialer Richtung überbrückt.

Vorschlagsgemäß ist der dem Kraftfahrzeugschloss zugeordnete Antrieb also nach Art einer Axialflussmaschine aufgebaut. Das für die motorische Verstellung des Stellelements maßgebliche Arbeits-Magnetfeld ist hier und vorzugsweise bezogen auf die Rotorachse axial ausgerichtet.

Eine weitere Steigerung des Wirkungsgrades lässt sich gemäß Anspruch 2 dadurch erreichen, dass die Pole den Rotor beidseitig einfassen, so dass eine gezielte Führung des von der Spulenanordnung erzeugten Magnetfelds mit geringem konstruktivem Aufwand möglich ist.

Eine unter Kostengesichtspunkten besonders interessante bevorzugte Ausführungsform ist Gegenstand von Anspruch 7. Hier wird die rotatorische Lagerung des Stellelements gleichzeitig für die rotatorische Lagerung des Rotors genutzt. Diese Doppelnutzung der rotatorischen Lagerung ist kosteneffektiv und zusätzlich unter Montagegesichtspunkten vorteilhaft. In einer besonders bevorzugten Variante lässt sich das Stellelement zur Montage zusammen mit dem Rotor an den Stator ansetzen. Aufgrund der in obiger Weise realisierten Lagerung des Rotors über die Lagerung des Stellelements lässt sich dieses Ansetzen auf besonders einfache mechanische Weise realisieren. Theoretisch wäre es sogar denkbar, dass dieses Ansetzen mechanisch kontaktlos erfolgt.

Bei der weiter bevorzugten Ausgestaltung gemäß Anspruch 8 dient der Antrieb zur Einstellung unterschiedlicher Funktionszustände des Kraftfahrzeugschlosses. Beispiele hierfür sind die Funktionszustände "verriegelt", "entriegelt", "diebstahlgesichert", "verriegelt-kindergesichert" und "entriegelt-kindergesichert".

Die oben angesprochenen Funktionszustände des Kraftfahrzeugschlosses betreffen die Möglichkeit des Öffnens einer Kraftfahrzeugtür o. dgl. mittels eines Türinnengriffs und mittels eines Türaußengriffs. Im Funktionszustand "verriegelt" kann von innen geöffnet werden, nicht jedoch von außen. Im Funktionszustand "entriegelt" kann sowohl von innen als auch von außen geöffnet werden. Im Funktionszustand "diebstahlgesichert" kann weder von innen noch von außen geöffnet werden. Im Funktionszustand "verriegelt-kindergesichert" kann von innen entriegelt, aber weder von innen noch von außen geöffnet werden. Im Funktionszustand "entriegelt-kindergesichert" kann von außen, nicht jedoch von innen geöffnet werden.

Bei der weiter bevorzugten Ausgestaltung gemäß Anspruch 9 ist das den jeweiligen Funktionszustand des Kraftfahrzeugschlosses bestimmende Funktionselement als Draht oder Streifen ausgestaltet, der in einer Variante in unterschiedliche Funktionsstellungen biegbar ist. Mit einem solchen als Draht oder Streifen ausgestalteten Funktionselement lässt sich die Flexibilität hinsichtlich der beliebigen Einstellung von Funktionszuständen voll ausnutzen.

Interessant bei der vorschlagsgemäßen Lösung ist die Tatsache, dass eine stationäre Bestromung der Spulenanordnung zu magnetisch stabilen Antriebsstellungen des Stellelements führen kann. Die Formulierung "magnetisch stabil" bedeutet hier, dass die Bestromung der Spulenanordnung mit dem resultierenden Magnetfeld dafür sorgt, dass das Stellelement bei einer Auslenkung aus der jeweiligen Antriebsstellung heraus stets zurück in diese Antriebsstellung getrieben wird. Dies betrifft selbstredend eine Auslenkung des Stellelements in beiden Verstellrichtungen. Der Begriff "stationäre Bestromung" bedeutet hier, dass sich die eingestellte Bestromung im Zeitbereich nicht ändert. Der Begriff "Bestromung" ist dabei allgemein zu verstehen und umfasst sowohl das Anlegen einer elektrischen Spannung als auch das Einprägen eines elektrischen Stroms in die Spulenanordnung. Dabei kann die Spannung bzw. der Strom auch gepulst o. dgl. sein. Im einfachsten Fall wird für eine stationäre Bestromung im obigen Sinne eine konstante Spannung auf den betreffenden Teil der Spulenanordnung aufgeschaltet.

Nach einer weiteren Lehre gemäß Anspruch 14, der eigenständige Bedeutung zukommt, wird ein Verfahren zur Ansteuerung eines vorschlagsgemäßen Kraftfahrzeugschlosses beansprucht.

Wesentlich nach der weiteren Lehre ist die Überlegung, die Spulenanordnung für das Anfahren von mindestens zwei magnetisch stabilen Antriebsstellungen des Stellelements unterschiedlich stationär zu bestromen. Die biermit verbundenen Vorteile wurden weiter oben bereits erläutert.

Im Folgenden wird die Erfindung anhand einer lediglich ein Ausfübrungsbeispiel darstellenden Zeichnung näher erläutert. In der Zeichnung zeigt
- Fig. 1: die für die Erfindung wesentlichen Bestandteile eines vorschlagsgemäßen Kraftfahrzeugschlosses,
- Fig. 2: den Antrieb des Kraftfahrzeugschlosses gemäß Fig. 1 in einer schematischen, perspektivischen Darstellung,
- Fig. 3: den Antrieb des Kraftfahrzeugschlosses gemäß Fig. 1 in einer weiteren Ausführungsform in einer schematischen, perspektivischen Darstellung.

Es darf vorab darauf hingewiesen werden, dass in der Zeichnung nur die Komponenten des vorschlagsgemäßen Kraftfahrzeugschlosses dargestellt sind, die für die Erläuterung der Lehre notwendig sind. Entsprechend ist eine Schlossfalle, die in üblicher Weise mit einem Schließbolzen o. dgl. zusammenwirkt und die mittels einer Sperrklinke in einer Hauptschließstellung und in einer ggf. vorhandenen Vorschließstellung gehalten wird, in der Zeichnung nicht dargestellt.

Das Kraftfahrzeugschloss weist ein um eine Stellelementachse 1 verstellbares Verstellelement 2 auf, bei dem es sich hier um eine Steuerwelle handelt.

Das Stellelement 2 kann grundsätzlich mehrstückig ausgestaltet sein, beispielsweise mindestens zwei miteinander gekoppelte, insbesondere miteinander verbundene, auf die Stellelementachse 1 ausgerichtete Wellenabschnitte aufweisen. Denkbar ist aber auch, dass das Stellelement 2 einstückig ausgestaltet ist.

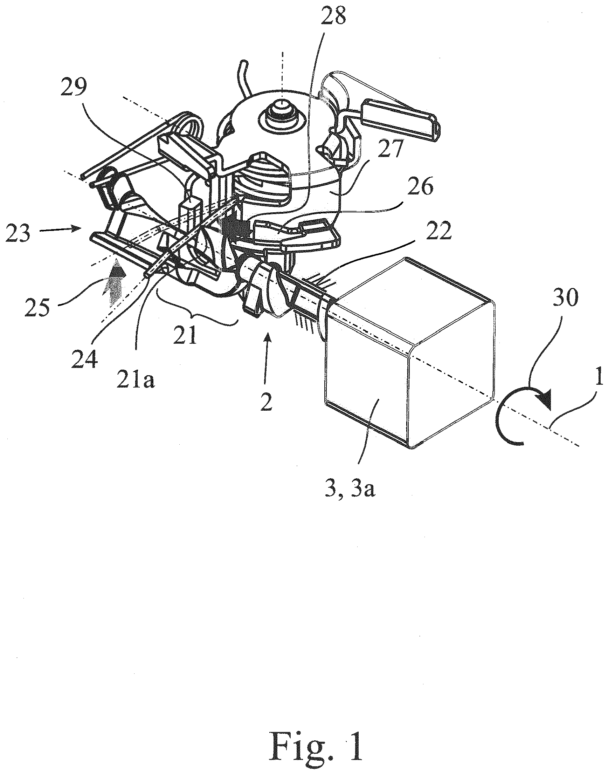

Weiter ist das Kraftfahrzeugschloss mit einem Antrieb 3 zur Verstellung des Stellelements 2 ausgestattet. Der Antrieb 3 dient hier der Einstellung unterschiedlicher Funktionszustände des Kraftfahrzeugschlosses, was weiter unten im Detail erläutert wird. In Fig. 1 ist der Antrieb 3 mit einem Antriebsgehäuse 3a gezeigt, das für die vorschlagsgemäße Lösung aber nicht unbedingt vorgesehen sein muss.

Der Antrieb 3 weist einen dem Stellelement 2 zugeordneten Rotor 4 mit einer Permanentmagnetanordnung 5 sowie einen Ständer 6 mit einer Spulenanordnung 7 aus mindestens zwei Spulen 8-11, hier und vorzugsweise aus vier Spulen 8-11 auf. Es hat sich in Versuchen gezeigt, dass eine Spulenanordnung 7 aus drei Spulen im Hinblick auf die Antriebsmomenterzeugung vorteilhaft sein kann.

Der Antrieb 3 ist hier und vorzugsweise nach Art eines Direktantriebs ausgestaltet. Dies bedeutet, dass zwischen dem Stellelement 2 und dem Rotor 4 keine Getriebeübersetzung oder Getriebeuntersetzung vorgesehen ist.

Der Ständer 6 des Antriebs 3 weist mindestens zwei Pole, hier und vorzugsweise vier Pole 12-15 auf, über die ein von der Spulenanordnung 7 erzeugtes Magnetfeld geführt wird. Die Pole 12-15 reichen hier und vorzugsweise bis auf einen bezogen auf die Stellelementachse 1 axialen Spalt 16, 17 an eine Stirnseite 18, 19 des Rotors 4 heran. Dies kann grundsätzlich auch nur für einen Teil der Pole 12-15 vorgesehen sein.

Dem Antrieb 3 des Kraftfahrzeugschlosses kommt vorschlagsgemäß die grundsätzliche Struktur eines Axialflussmotors zu. Mit dem für die Erzeugung von Antriebsmomenten maßgeblichen, bezogen auf die Rotorachse axialen Arbeits-Magnetfeld lassen sich bei kompakter Bauart vergleichsweise hohe Drehmomente erzeugen, so dass sich der Antrieb 3 des vorschlagsgemäßen Kraftfahrzeugschlosses besonders gut als Direktantrieb eignet.

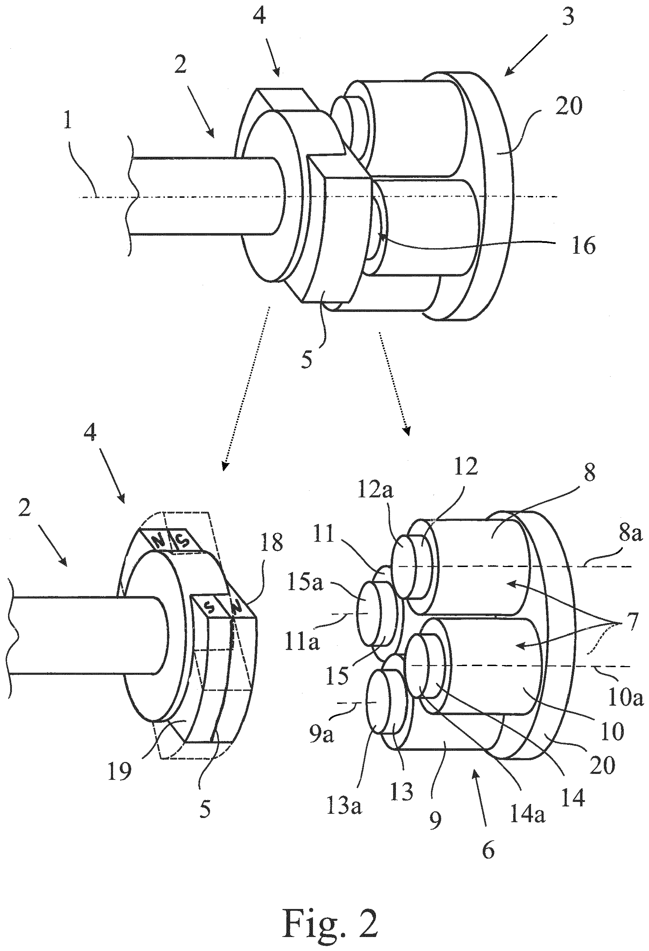

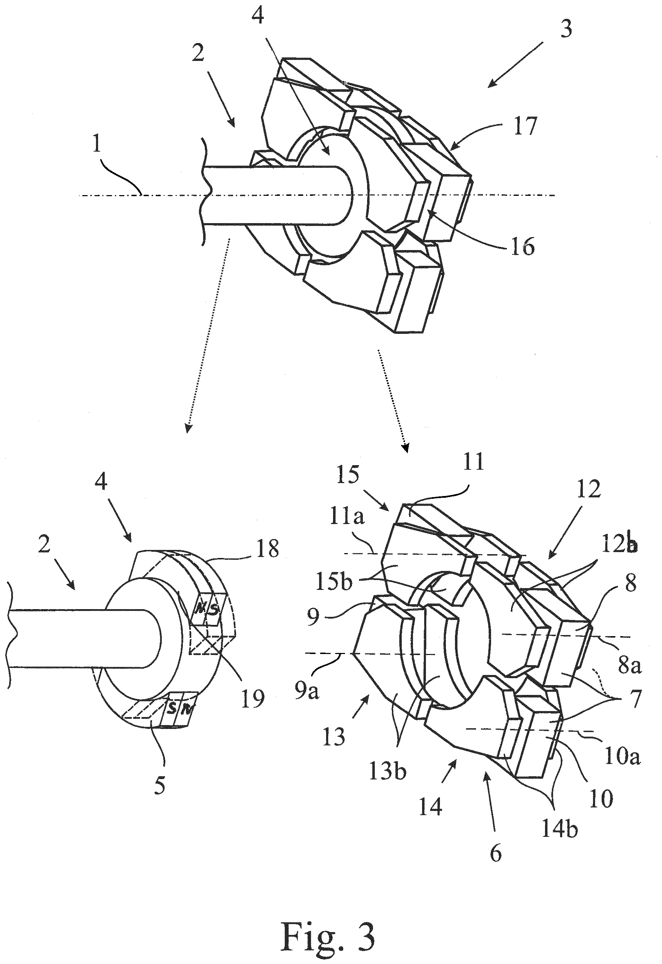

Bei dem in Fig. 2 dargestellten, konstruktiv besonders einfach aufgebautem Ausführungsbeispiel reichen die Pole 12-15 des Ständers 6 nur an eine Stirnseite 18 des Rotors 4 heran. Bei der besonders verlustarmen Ausgestaltung gemäß Fig. 3 reichen die Pole 12-15 jeweils in axialer Richtung an zwei gegenüberliegende Stirnseiten 18, 19 des Rotors 4 jeweils bis auf einen Spalt 16, 17 heran. Dadurch wird erreicht, dass die Pole 12-15 den Rotor 4 beidseitig, also an beiden Stirnseiten, 18, 19 des Rotors 4, einfassen.

Bei dem in Fig. 2 dargestellten Ausführungsbeispiel sind die Pole 12-15 als im Wesentlichen zylindrische Polschuhe ausgestaltet, die jeweils eine Ebene, dem Rotor 4 zugewandte Polfläche 12a-15a aufweisen. Bei dem in Fig. 3 dargestellten Ausführungsbeispiel weisen die Pole 12-15 jeweils zwei Polbleche 12b-15b auf, die parallel zueinander ausgerichtet sind und die den Rotor 4 wie oben erläutert beidseitig einfassen. Die Polbleche 12b-15b sind hier und vorzugsweise magnetisch leitend verbunden. Denkbar ist in diesem Zusammenhang, dass die Polbleche 12b-15b mit einem Eisenkern der Spulen 8-11 magnetisch gekoppelt sind.

Der Spalt 16, 17 zwischen Rotor 4 und Polen 12-15 liegt bei einem kreisrunden Rotor 4 für alle Pole 12-15 unabhängig von der Stellung des Rotors 4 vor. Hier und vorzugsweise ist der Rotor 4 allerdings in noch zu erläuternder Weise länglich ausgestaltet, so dass der Rotor 4 nicht alle Pole 12-15 gleichzeitig überstreicht. Entsprechend ist es so, dass der Spalt 16, 17 in Abhängigkeit von der Stellung des Rotors 4 gebildet wird.

Der Spalt 16, 17 erstreckt sich hier und vorzugsweise entlang einer Spaltebene, die sich in besonders bevorzugter Ausgestaltung senkrecht zu der Stellelementachse 1 erstreckt. Dies entspricht der obigen Maßgabe, dass das Arbeits-Magnetfeld parallel zu der Stellelementachse 1 ausgerichtet ist. Dadurch, dass die Spulenachsen hier und vorzugsweise ebenfalls parallel zu der Stellelementachse 1 ausgerichtet sind, ist eine Umlenkung des von der Spulenanordnung 7 erzeugten Magnetfelds nicht notwendig, was den Wirkungsgrad des Antriebs 3 weiter erhöht.

Bei dem dargestellten und insoweit bevorzugten Ausführungsbeispiel ist jedem Pol 12-15 des Antriebs 3 eine Spule 8-11 der Spulenanordnung 7 zugeordnet, wobei sich jeder Pol 12-15 durch die ihm zugeordnete Spule 8-11 erstreckt. Insoweit dienen die Pole 12-15 gleichzeitig als Magnetkerne für die jeweiligen Spulen 8-11.

Bei dem in Fig. 2 dargestellten Ausführungsbeispiel sind die Pole 12-15 des Ständers 6 mittels einer Leitanordnung 20 magnetisch miteinander gekoppelt, so dass die Leitanordnung 20 einen geschlossenen magnetischen Schluss zwischen den Polen 12-15 des Ständers 6 gewährleistet. Hier und vorzugsweise ist die Leitanordnung 20 ungeblecht ausgestaltet, was zu einer besonders kostengünstigen Realisierung führt. Die ungeblechte Realisierung der Leitanordnung 20 ist insbesondere bei der vorschlagsgemäßen, noch zu erläuternden Betriebsweise des Antriebs 3 vertretbar, da bei dieser Betriebsweise geringe Wirbelstromverluste zu erwarten sind.

Bei der Leitanordnung 20 handelt es sich vorzugsweise um eine ebene Platte, die senkrecht zu der Stellelementachse 1 ausgerichtet ist und von der die Pole 12-15 parallel zu der Stellelementachse 1 abragen.

Für die Art der Permanentmagnetanordnung 5 sind grundsätzlich eine Reihe vorteilhafter Realisierungsmöglichkeiten denkbar. In einer bevorzugten Variante ist die Permanentmagnetanordnung 5 bezogen auf die Stellelementachse 1 diametral magnetisiert, wie den Darstellungen gemäß den Fig. 2 und 3 entnommen werden kann. Grundsätzlich kann es sich bei der Permanentmagnetanordnung 5 auch um eine mehrpolige Permanentmagnetanordnung 5 handeln.

Für den Fall einer diametral magnetisierten Permanentmagnetanordnung 5 ist die Permanentmagnetanordnung 5 vorzugsweise in Richtung der Magnetisierungsachse länglich ausgestaltet. Als "Magnetisierungsachse" wird vorliegend die Achse bezeichnet, auf der Nord- und Südpol der Permanentmagnetanordnung 5 gelegen sind. Mit der Form der Permanentmagnetanordnung 5 lässt sich das Erreger-Magnetfeld und damit die Drehmomentcharakteristik des Antriebs 3 gezielt einstellen.

Alternativ kann es vorgesehen sein, dass die Permanentmagnetanordnung 5, wie in der Zeichnung angedeutet, axial magnetisiert ist. Dann ist die Magnetisierungsachse vorzugsweise parallel zu der Stellelementachse 1 ausgerichtet. Die Permanentmagnetanordnung 5 weist hier und vorzugsweise zwei, von der Stellelementachse 1 ausgehend sich in entgegengesetzten Richtungen erstreckende Abschnitte auf, die axial entgegengesetzt magnetisiert sind. Die Erstreckungsrichtungen sind hier senkrecht zu der Stellelementachse 1 ausgerichtet. Letztlich weist die Permanentmagnetanordnung 5 entsprechend zwei entgegengesetzt magnetisierte Permanentmagnete auf. Die Permanentmagnetanordnung 5 ist hier und vorzugsweise in Richtung der Magnetisierungsachse flach ausgestaltet. Vorzugsweise weist die Permanentmagnetanordnung 5 mindestens einen Hartferrit-Magneten und/oder mindestens einen Seltenerdmagneten und/oder mindestens einen kunststoffgebundenen Magneten auf. Weiter kann das Stellelement 2, insbesondere die Steuerwelle 2, bei entsprechender Auslegung auch selbst magnetisiert sein und entsprechend die Permanentmagnetanordnung 5 bilden. Dies ist beispielsweise möglich, wenn das Stellelement 2 jedenfalls teilweise, vorzugsweise vollständig, aus einem obigen Material, insbesondere aus einem magnetisierbaren Kunststoffmaterial besteht.

Besonders interessant bei dem in Fig. 1 dargestellten Ausführungsbeispiel ist die Tatsache, dass das Stellelement 2 als Steuerwelle mit mindestens einem axialen Steuerabschnitt 21 zum Ausleiten von Steuerbewegungen ausgestaltet ist. Die Funktion des Steuerabschnitts 21 wird weiter unten erläutert.

Die Permanentmagnetanordnung 5 ist endseitig der Steuerwelle 2 angeordnet. Sie kann an die Steuerwelle 2 angeklipst, auf die Steuerwelle 2 angeklebt oder auf andere Weise an der Steuerwelle 2 befestigt sein.

Weiter vorzugsweise ist es so, dass der Rotor 4 selbst eine Leitanordnung bereitstellt, um den magnetischen Rückfluss zu gewährleisten. Eine solche Leitanordnung könnte in Fig. 2 an der der Spulenanordnung 7 abgewandten Stirnseite 19 des Rotors 4 vorgesehen sein.

Interessant bei den dargestellten und insoweit bevorzugten Ausführungsbeispielen ist die Lagerung des Rotors 4. Hier ist das Stellelement 2, insbesondere die Steuerwelle 2, an einem vom Ständer 6 verschiedenen Trägerteil, hier und vorzugsweise an einem Gehäuseteil, des Kraftfahrzeugschlosses mittels einer Lageranordnung 22 rotatorisch gelagert, wobei der Rotor 4 ausschließlich über die Lageranordnung 22 des Stellelements 2 rotatorisch gelagert ist. Die rotatorische Lagerung des Rotors 4 findet also unabhängig vom Ständer 6 statt.

Bei dem in Fig. 2 dargestellten Ausführungsbeispiel ist es so, dass zur Montage das Stellelement 2 zusammen mit dem Rotor 4 an den Ständer 6 ansetzbar ist. Eine Lagerverbindung zwischen dem Rotor 4 und dem Ständer 6 ist bei diesem Ansetzen nicht erforderlich. Grundsätzlich ist es damit möglich, dass der Ständer 6 an einem Trägerteil oder einem Gehäuseteil des Kraftfahrzeugschlosses montierbar ist, bevor das Stellelement 2 zusammen mit dem Rotor 4 montiert wird. Wie schon angedeutet dient der Antrieb 3 der Einstellung verschiedener Funktionszustände des Kraftfahrzeugschlosses. Hierfür weist das Kraftfahrzeugschloss zunächst eine Schlossmechanik 23 auf, die in unterschiedliche Funktionszustände wie "verriegelt", "entriegelt", "diebstahlgesichert", "verriegelt-kindergesichert" und "entriegelt-kindergesichert" bringbar ist. Die Bedeutung dieser Funktionszustände für die Möglichkeit des Öffnens der Kraftfahrzeugtür o. dgl. von innen und von außen wurde im allgemeinen Teil der Beschreibung erläutert.

Zur Einstellung der verschiedenen Funktionszustände ist hier und vorzugsweise ein verstellbares Funktionselement 24 vorgesehen, wobei das Stellelement 2, hier die Steuerwelle 2, in antriebstechnischem Eingriff mit dem Funktionselement 24 steht oder bringbar ist. Denkbar ist auch, dass das Stellelement 2, d.h. die Steuerwelle 2, selbst ein Bestandteil des Funktionselements 24 ist.

Vorzugsweise ist es so, dass sich das Funktionselement 24 an dem Steuerabschnitt 21 der Steuerwelle 2 abstützt. Je nach Stellung der Steuerwelle 2 verstellt sich das Funktionselement 24 im Wesentlichen senkrecht zu der Stellelementachse 1, wie in Fig. 1 durch den Bewegungspfeil 25 und durch die gestrichelte Darstellung des Funktionselements 24 dargestellt ist. Der Steuerabschnitt 21 ist vorzugsweise wie in Fig. 1 dargestellt mit einer Nocke 21a ausgestattet, auf der sich das Funktionselement 24 entsprechend abstützt. Je nach Stellung der Steuerwelle 2 führt die Abstützung des Funktionselements 24 an der Nocke 21a zu einer resultierenden Auslenkung des Funktionselements 24 in Richtung des Bewegungspfeils 25.

Die Steuerwelle 2 lässt sich mittels des Antriebs 3 nun in mindestens zwei Steuerstellungen, hier und vorzugsweise in insgesamt 5 Steuerstellungen, bringen, um die Funktionszustände des Kraftfahrzeugschlosses, hier die Funktionszustände "verriegelt", "entriegelt", "diebstahlgesichert", "verriegelt-kindergesichert" und "entriegelt-kindergesichert" einstellen zu können.

Besonders einfach gestaltet sich der Aufbau des vorschlagsgemäßen Kraftfahrzeugschlosses dadurch, dass das Funktionselement 24 als Draht ausgestaltet ist und in unterschiedliche Funktionsstellungen entlang des Bewegungspfeils 25 auslenkbar ist. Grundsätzlich ist es auch denkbar, dass das Funktioselement 24 als Streifen ausgestaltet ist. Hier und vorzugsweise ist es weiter so, dass das Funktionselement 24 als federelastischer Draht oder Streifen ausgestaltet ist und so als Biege-Funktionselement in die unterschiedlichen Funktionsstellungen bringbar ist.

Im Folgenden wird die Funktionsweise des Kraftfahrzeugschlosses in den Funktionszuständen "entriegelt" und "entriegelt-kindergesichert" erläutert. Im Übrigen darf zur Erläuterung der grundsätzlichen Funktionsweise des Kraftfahrzeugschlosses mit federelastischem Funktionselement 24 auf die internationale Patentanmeldung WO 2009/040074 A1 verwiesen werden, die auf die Anmelderin zurückgeht.

Im Funktionszustand "entriegelt" steht das Funktionselement 24 in seiner in Fig. 1 unteren, in durchgezogener Linie dargestellten Stellung. Damit befindet sich das Funktionselement 24 im Bewegungsbereich eines Innenbetätigungshebels 26, der im montierten Zustand mit einem Türinnengriff gekoppelt ist sowie im Bewegungsbereich eines Außenbetätigungshebels 27, der im montierten Zustand mit einem Türaußengriff gekoppelt ist. Eine Verstellung des Innenbetätigungshebels 26 oder des Außenbetätigungshebels 27 in Richtung des Bewegungspfeils 28 führt dazu, dass das Funktionselement 24 senkrecht zu seiner Erstreckung der Bewegung des jeweiligen Hebels 26, 27 folgt, auf die in Fig. 1 nur angedeutete Sperrklinke 29 trifft und diese wiederum in Richtung des Bewegungspfeils 28 mitnimmt und aushebt.

Eine Verstellung der Steuerwelle 2 in Richtung des Bewegungspfeils 30 um 90° aus der in Fig. 1 dargestellten Stellung heraus führt zur Einstellung des Funktionszustands "entriegelt-kindergesichert". In diesem Zustand befindet sich das Funktionselement 24 in der in Fig. 1 in gestrichelter Linie dargestellten Stellung. Eine Verstellung des Innenbetätigungshebels 26 in Richtung des Bewegungspfeils 28 hat damit keine Auswirkung auf das Funktionselement 24 und die Sperrklinke 29. Das Funktionselement 24 befindet sich allerdings im Bewegungsbereich des Außenbetätigungshebels 27, so dass ein Ausheben der Sperrklinke 29 und damit ein Öffnen der Kraftfahrzeugtür über den Außenbetätigungshebel 27 und damit über den Türaußengriff möglich ist.

Analog zu der Einstellung der oben beschriebenen Funktionszustände "entriegelt" und "entriegelt-kindergesichert" lassen sich auch alle anderen oben angesprochenen Funktionszustände allein durch eine entsprechende Verstellung der Steuerwelle 2 umsetzen. Der Antrieb 3 ist dazu ausgelegt, alle Funktionszustände entsprechend anzufahren.

Es wurde schon darauf hingewiesen, dass durch die bevorzugte Ausgestaltung des Antriebs 3 als Direktantrieb auf jegliche Getriebekomponenten zwischen dem Rotor 4 und dem Stellelement 2 verzichtet werden kann. Aus diesem Grunde ist der Antrieb 3 mechanisch nicht selbsthemmend ausgestaltet, was eine unproblematische manuelle Einstellung von Funktionszuständen des Kraftfahrzeugschlosses ermöglicht.

Der Auslegung der Spulenanordnung 7, insbesondere der Auslegung und Anordnung der Spulen 8-11, kommt vorliegend ganz besondere Bedeutung zu. Vorliegend weist die Spulenanordnung 7 mindestens zwei, hier genau zwei, Spulenpaare 8, 9; 10, 11 auf, die zumindest auch paarweise angesteuert werden. Hier und vorzugsweise sind die beiden Spulen 8, 9; 10, 11 elektrisch in Reihe geschaltet.

Für das dargestellte Kraftfahrzeugschloss hat sich eine bezogen auf die Stellelementachse 1 symmetrische Anordnung der Spulen 8-11 bewährt. Entsprechend sind die beiden Spulen 8, 9; 10, 11 eines Spulenpaars bezogen auf die Stellelementachse 1 diametral gegenüberliegend angeordnet, wobei die Spulenachsen 8a-11a jeweils parallel zu der Stellelementachse 1 bzw. der Rotorachse ausgerichtet sind.

Grundsätzlich sind vielfältige vorteilhafte Varianten für die Ausrichtung der Spulenanordnung 7 denkbar. Dies liegt daran, dass die Möglichkeit des Leitens von magnetischem Fluß durch eine entsprechende magnetische Leitanordnung besteht. Beispielsweise kann es vorteilhaft sein, zumindest einen Teil der Spulen 8-11 der Spulenanordnung 7 senkrecht zu der Stellelementachse 1 auszurichten, wobei die Spulen 8-11 dann vorzugsweise um eine jochartige Leitanordnung zur Umleitung des magnetischen Flusses gewickelt sind.

Es ergibt sich aus den voranstehenden Erläuterungen bereits, dass der vorschlagsgemäße Antrieb 3 nicht in erster Linie als Drehantrieb ausgestaltet ist, der zur Verstellung des Stellelements 2 eine Vielzahl von Umdrehungen vollzieht. Vielmehr handelt es sich bei dem Antrieb 3 vorzugsweise um eine Art Schrittmotor, der eine vorbestimmte Anzahl von Stellungen gezielt anfährt. Dabei kann es vorgesehen sein, dass der Antrieb 3 nicht mehr als eine Umdrehung, oder sogar weniger als eine Umdrehung, vollzieht. Denkbar ist aber auch, dass der Antrieb 3 derart freidrehend ausgestaltet ist, dass er schrittweise eine beliebige Anzahl von Umdrehungen vollziehen kann. Vorteilhaft dabei ist die Tatsache, dass bei dem vorschlagsgemäßen, gezielten Anfahren der Antriebsstellungen mit nur geringen Wirbelstromverlusten in den Polen 12-15 sowie in der Leitanordnung 20 zu rechnen ist. Auf eine Blechung insbesondere der Leitanordnung 20 kann somit verzichtet werden.

Interessant bei dem vorschlagsgemäßen Antrieb 3 ist vor allem die Tatsache, dass durch unterschiedliche stationäre Bestromung der Spulenanordnung 7 mindestens zwei, hier insgesamt fünf, magnetisch stabile Antriebsstellungen des Stellelements 2 angefahren werden. Grundsätzlich sind hier sogar insgesamt acht magnetisch stabile Antriebsstellungen des Stellelements 2 anfahrbar.

Im Sinne der oben angesprochenen Auslegung des Begriffs "stationäre Bestromung" wird die Bestromung lediglich aufgeschaltet, und nicht etwa im Hinblick auf einen bestimmten Bewegungsablauf o. dgl. geregelt. Es wurde auch schon erläutert, dass der Begriff "magnetisch stabile Antriebsstellung" vorliegend bedeutet, dass während der Bestromung das Stellelement 2 stets in die entsprechende Antriebsstellung drängt, und zwar unabhängig von der Richtung einer von außen einwirkenden Auslenkkraft. Dies bedeutet, dass ein Anfahren der Antriebsstellungen, die den entsprechenden Steuerstellungen des Stellelements 2 entsprechen, ohne die Notwendigkeit eines Endanschlags o. dgl. erfolgen kann. Das ist verschleiß- und geräuschreduzierend und vereinfacht die mechanische Konstruktion.

Vorzugsweise ist es also so, dass durch Bestromung der Spulen 8-11 der Spulenanordnung 7 in einer der jeweiligen Antriebsstellung zugeordneten Spulenkombination in einer der jeweiligen Antriebsstellung zugeordneten Bestromungsrichtung mindestens zwei magnetisch stabile Antriebsstellungen anfahrbar sind. Die angefahrene Antriebsstellung ergibt sich ausschließlich aus der bestromten Spulenkombination sowie der Bestromungsrichtung. Dies ermöglicht eine besonders einfache Auslegung einer der Spulenanordnung 7 zugeordneten Steuerungseinrichtung.

Nach einer weiteren Lehre, der ebenfalls eigenständige Bedeutung zukommt, wird das oben erläuterte Verfahren als solches zur Ansteuerung eines vorschlagsgemäßen Kraftfahrzeugschlosses beansprucht. Wesentlich nach diesem Verfahren ist, das die Spulenanordnung 7 für das Anfahren von mindestens zwei magnetisch stabilen Antriebsstellungen des Stellelements 2 unterschiedlich stationär bestromt wird. Auf alle obigen, die Ansteuerung des vorschlagsgemäßen Kraftfahrzeugschlosses betreffenden Ausführungen darf verwiesen werden.

Es darf zusammengefasst werden, dass mit dem vorschlagsgemäßen Antrieb 3 ein gezieltes Anfahren vorbestimmter Antriebsstellungen, die jeweils einem Funktionszustand des Kraftfahrzeugs entsprechen, möglich ist, ohne dass eine verschleiß- und geräuschintensive Kommutierung erforderlich ist. Insgesamt ergibt sich eine hohe Ausfallsicherheit, da keine Schleifkontakte notwendig sind, der Antrieb 3 nur aus wenigen Einzelteilen aufgebaut ist und aufgrund der magnetischen Stabilität der Antriebsstellungen keine Endanschläge erforderlich sind. Die Materialkosten reduzieren sich durch die geringe Anzahl der Bauteile und insbesondere dadurch, dass für die Einstellung einer Vielzahl von Funktionszuständen nur ein einziger Antrieb erforderlich ist. Hiermit geht wiederum eine Gewichtsreduzierung im Vergleich mit den bekannten Kraftfahrzeugschlössern einher. Weiter ergibt sich die Möglichkeit einer besonders einfachen Montage, sofern, wie oben erläutert, die Lagerung des Rotors 4 unabhängig von dem Ständer 6 realisiert ist.

Es darf darauf hingewiesen werden, dass der vorschlagsgemäße Antrieb 3 innerhalb des Kraftfahrzeugschlosses in ganz unterschiedlicher Weise genutzt werden kann. Neben der Einstellung von Funktionszuständen kann der Antrieb 3 beispielsweise zum motorischen Ausheben der Sperrklinke 29 genutzt werden, da hierfür nur kleine Betätigungswege erforderlich sind. Grundsätzlich ist aber auch der Einsatz im Rahmen einer Zuziehhilfe o. dgl. denkbar.

Weiter darf darauf hingewiesen werden, dass sich der Betriebszustand des Rotors 4 des Antriebs 3 auf besonders einfache Weise erfassen lässt. In einer bevorzugten Variante ist es vorgesehen, dass mittels einer nicht dargestellten Sensoreinrichtung das magnetische Feld der Permanentmagnetanordnung 5 erfasst wird und dass der Betriebszustand, hier und vorzugsweise die Lage, des Rotors 4 aus den Sensormesswerten der Sensoreinrichtung ermittelt wird. Bei der Sensoreinrichtung kann es sich beispielsweise um ein Hall-Sensor oder mehrere Hall-Sensoren, um einen MR-Sensor oder mehrere MR-Sensoren o. dgl. handeln. Der Begriff "Ermittlung des Betriebszustands des Rotors 4" ist vorliegend weit zu verstehen. Er umfasst nicht nur die Ermittlung der obigen Funktionszustände, sondern auch die Ermittlung von Informationen, die beispielsweise zusammen mit den Daten eines separaten Sensors, beispielsweise eines Drehsensors, eine Plausibilitätsprüfung ermöglichen. Zusätzliche Schalt- oder Reibkräfte sind hiermit nicht verbunden. Die notwendige elektrische Verdrahtung lässt sich in einem eventuell vorhandenen Lagerschild des Antriebs 3 unterbringen. Bei entsprechender Auslegung, insbesondere einer entsprechenden Signalcodierung, ist eine Übertragung der Sensormeßwerte über nur eine elektrische Leitung denkbar, was besonders kosteneffektiv ist. Diese Erfassung des Betriebszustands des Rotors 4 lässt sich ganz grundsätzlich auf alle denkbaren Bauformen des Antriebs 3 anwenden, ohne dass es auf die Realisierung einer Axialflussmaschine ankommt.

Schließlich darf noch zur Klarstellung darauf hingewiesen werden, dass die Komponenten des Kraftfahrzeugschlosses nicht notwendigerweise in ein und demselben Gehäuse untergebracht sein müssen. Insbesondere kann es vorteilhaft sein, den Antrieb 3 in einem von dem Kraftfahrzeugschloss im Übrigen getrennt ausgestalteten Gehäuse vorzusehen, so dass das Kraftfahrzeugschloss insoweit verteilt angeordnet ist.

## Patentansprüche

1. Kraftfahrzeugschloss mit einem um eine Stellelementachse (1) verstellbaren Stellelement (2) und einem Antrieb (3) zur Verstellung des Stellelements (2), wobei der Antrieb (3) einen dem Stellelement (2) zugeordneten Rotor (4) mit einer Permanentmagnetanordnung (5) und einen Ständer (6) mit einer Spulenanordnung (7) aus mindestens zwei Spulen (8-11) aufweist,
**dadurch gekennzeichnet,**
**dass** das Stellelement (2) eine Steuerwelle ist, dass der Ständer (6) mindestens zwei Pole (12-15) aufweist, über die ein von der Spulenanordnung (7) erzeugtes Magnetfeld geführt wird, dass, ggf. in Abhängigkeit von der Stellung des Rotors (4), mindestens ein Pol (12-15) des Ständers (6) bis auf einen bezogen auf die Stellelementachse (1) axialen Spalt (16, 17) an eine Stirnseite (18, 19) des Rotors (4) heranreicht und dass durch unterschiedliche stationäre Bestromung der Spulenanordnung (7) mindestens zwei magnetisch stabile Antriebsstellungen des Stellelements (2) anfahrbar sind.

2. Kraftfahrzeugschloss nach Anspruch 1, **dadurch gekennzeichnet, dass** die Pole (12-15) jeweils in axialer Richtung an zwei gegenüberliegende Stirnseiten (18, 19) des Rotors (4) jeweils bis auf den Spalt (16, 17) heranreichen und so den Rotor (4) beidseitig einfassen.

3. Kraftfahrzeugschloss nach Anspruch 1 oder 2, **dadurch gekennzeichnet, dass** sich der Spalt (16, 17) entlang einer Spaltebene erstreckt, vorzugsweise, dass sich die Spaltebene senkrecht zu der Stellelementachse (1) erstreckt.

4. Kraftfahrzeugschloss nach einem der vorhergehenden Ansprüche, **dadurch gekennzeichnet, dass** jedem Pol (12-15) eine Spule (8-11) der Spulenanordnung (7) zugeordnet ist, vorzugsweise, dass sich jeder Pol (12-15) durch die ihm zugeordnete Spule (8-11) erstreckt.

5. Kraftfahrzeugschloss nach einem der vorhergehenden Ansprüche, **dadurch gekennzeichnet, dass** eine Leitanordnung (20) vorgesehen ist, die zumindest zwei Pole (12-15) des Ständers (6) magnetisch miteinander koppelt, vorzugsweise, dass die Leitanordnung (20) ungeblecht ausgestaltet ist.

6. Kraftfahrzeugschloss nach einem der vorhergehenden Ansprüche, **dadurch gekennzeichnet, dass** die Permanentmagnetanordnung (5) bezogen auf die Stellelementachse (1) diametral oder axial magnetisiert ist, vorzugsweise, dass die Permanentmagnetanordnung (5) in Richtung der Magnetisierungsachse länglich oder flach ausgestaltet ist.

7. Kraftfahrzeugschloss nach einem der vorhergehenden Ansprüche, **dadurch gekennzeichnet, dass** das Stellelement (2) an einem vom Ständer (6) verschiedenen Trägerteil, insbesondere an einem Gehäuseteil, des Kraftfahrzeugschlosses mittels einer Lageranordnung (22) rotatorisch gelagert ist und dass der Rotor (4) ausschließlich über die Lageranordnung (22) des Stellelements (2) rotatorisch gelagert ist, vorzugsweise, dass zur Montage das Stellelement (2) zusammen mit dem Rotor (4) an den Ständer (6) ansetzbar ist.

8. Kraftfahrzeugschloss nach einem der vorhergehenden Ansprüche, **dadurch gekennzeichnet, dass** das Kraftfahrzeugschloss eine Schlossmechanik (23) aufweist, die in unterschiedliche Funktionszustände wie "verriegelt", "entriegelt", "diebstahlgesichert", "verriegelt-kindergesichert" und "entriegelt-kindergesichert" bringbar ist, wobei zur Einstellung der verschiedenen Funktionszustände mindestens ein verstellbares Funktionselement (24) vorgesehen ist, wobei die Steuerwelle (2) in antriebstechnischem Eingriff mit dem Funktionselement (24) steht oder bringbar ist oder Bestandteil des Funktionselements (24) ist, vorzugsweise, dass sich das Funktionselement (24) an einem Steuerabschnitt (21) der Steuerwelle (2) abstützt.

9. Kraftfahrzeugschloss nach einem der vorhergehenden Ansprüche, **dadurch gekennzeichnet, dass** das Funktionselement (24) als Draht oder Streifen ausgestaltet ist und in unterschiedliche Funktionsstellungen auslenkbar ist, vorzugsweise, dass das Funktionselement (24) als federelastischer Draht oder Streifen ausgestaltet ist und so als Biege-Funktionselement in unterschiedliche Funktionsstellungen biegbar ist.

10. Kraftfahrzeugschloss nach einem der vorhergehenden Ansprüche, **dadurch gekennzeichnet, dass** die Spulenanordnung (7) mindestens zwei, vorzugsweise genau zwei, Spulenpaare (8, 9; 10, 11) aufweist, die zumindest auch paarweise angesteuert werden, vorzugsweise, dass die beiden Spulen (8, 9; 10, 11) eines Spulenpaars elektrisch in Reihe geschaltet sind.

11. Kraftfahrzeugschloss nach einem der vorhergehenden Ansprüche, **dadurch gekennzeichnet, dass** mindestens eine Spule (8-11) der Spulenanordnung (7) mit ihrer Spulenachse (8a-11a) parallel zu der Stellelementachse (1) ausgerichtet ist.

12. Kraftfahrzeugschloss nach einem der vorhergehenden Ansprüche, **dadurch gekennzeichnet, dass** durch Bestromung der Spulen (8-11) der Spulenanordnung (7) in einer der jeweiligen Antriebsstellung zugeordneten Spulenkombination in einer der jeweiligen Antriebsstellung zugeordneten Bestromungsrichtung mindestens zwei magnetisch stabile Antriebsstellungen anfahrbar sind.

13. Verfahren zur Ansteuerung eines Kraftfahrzeugschlosses nach einem der vorhergehenden Ansprüche, **dadurch gekennzeichnet, dass** die Spulenanordnung (7) für das Anfahren von mindestens zwei magnetisch stabilen Antriebsstellungen des Stellelements (2) unterschiedlich stationär bestromt wird.

14. Verfahren nach Anspruch 13, **dadurch gekennzeichnet, dass** zum Anfahren von mindestens zwei magnetisch stabilen Antriebsstellungen die Spulen (8-11) der Spulenanordnung (7) in einer der jeweiligen Antriebsstellung zugeordneten Spulenkombination in einer der jeweiligen Antriebsstellung zugeordneten Bestromungsrichtung stationär bestromt werden.

## Claims

1. Motor vehicle lock having an actuating element (2), which can be adjusted about an actuating element axis (1), and a drive (3) for adjusting the actuating element (2), the drive (3) having a rotor (4) which is assigned to the actuating element (2) and which has a permanent magnet arrangement (5), and a stator (6) with a coil arrangement (7) comprising at least two coils (8-11),
**characterized in that**
the actuating element (2) is a control shaft, **in that** the stator (6) has at least two poles (12-15), via which a magnetic field which is generated by the coil arrangement (7) is guided, **in that**, possibly in a manner which is dependent on the position of the rotor (4), at least one pole (12-15) of the stator (6) reaches up to an end side (18, 19) of the rotor (4) apart from an axial gap (16, 17) in relation to the actuating element axis (1), and **in that** at least two magnetically stable drive positions of the actuating element (2) can be moved to by way of different steady-state energization of the coil arrangement (7).

2. Motor vehicle lock according to Claim 1, **characterized in that** the poles (12-15) reach in each case in the axial direction up to two opposite end sides (18, 19) of the rotor (4), in each case apart from the gap (16, 17), and thus enclose the rotor (4) on both sides.

3. Motor vehicle lock according to Claim 1 or 2, **characterized in that** the gap (16, 17) extends along a gap plane, and preferably wherein the gap plane extends perpendicularly with respect to the actuating element axis (1).

4. Motor vehicle lock according to one of the preceding claims, **characterized in that** each pole (12-15) is assigned a coil (8-11) of the coil arrangement (7), and preferably wherein each pole (12-15) extends through the coil (8-11) which is assigned to it.

5. Motor vehicle lock according to one of the preceding claims, **characterized in that** a conducting arrangement (20) is provided which couples at least two poles (12-15) of the stator (6) to one another magnetically, and preferably wherein the conducting arrangement (20) is of unlaminated configuration.

6. Motor vehicle lock according to one of the preceding claims, **characterized in that** the permanent magnet arrangement (5) is magnetized diametrically or axially in relation to the actuating element axis (1), and preferably wherein the permanent magnet arrangement (5) is of elongate or flat configuration in the direction of the magnetization axis.

7. Motor vehicle lock according to one of the preceding claims, **characterized in that** the actuating element (2) is mounted rotationally by means of a bearing arrangement (22) on a carrier part which is different than the stator (6), in particular on a housing part, of the motor vehicle lock, and wherein the rotor (4) is mounted rotationally exclusively via the bearing arrangement (22) of the actuating element (2), and preferably wherein the actuating element (2) can be attached together with the rotor (4) to the stator (6) for assembly.

8. Motor vehicle lock according to one of the preceding claims, **characterized in that** the motor vehicle lock has a lock mechanism (23) which can be moved into different functional states such as "locked", "unlocked", "theft-proof", "locked, child-proof" and "unlocked, child-proof", at least one adjustable functional element (24) being provided in order to set the various functional states, the control shaft (2) being in drive engagement or being capable of being brought into drive engagement with the functional element (24), or being a constituent part of the functional element (24), and preferably wherein the functional element (24) is supported on a control section (21) of the control shaft (2).

9. Motor vehicle lock according to one of the preceding claims, **characterized in that** the functional element (24) is configured as a wire or strip and can be deflected into different functional positions, and preferably wherein the functional element (24) is configured as a resilient wire or strip and can thus be bent as a bending functional element into different functional positions.

10. Motor vehicle lock according to one of the preceding claims, **characterized in that** the coil arrangement (7) has at least two, preferably precisely two, coil pairs (8, 9; 10, 11) which are at least also actuated in pairs, and preferably **in that** the two coils (8, 9; 10, 11) of a coil pair are connected electrically in series.

11. Motor vehicle lock according to one of the preceding claims, **characterized in that** at least one coil (8-11) of the coil arrangement (7) is oriented with its coil axis (8a-11a) parallel to the actuating element axis (1) .

12. Motor vehicle lock according to one of the preceding claims, **characterized in that** at least two magnetically stable drive positions can be moved to in an energization direction which is assigned to the respective drive position by way of energization of the coils (8-11) of the coil arrangement (7) in a coil combination which is assigned to the respective drive position.

13. Method for actuating a motor vehicle lock according to one of the preceding claims, **characterized in that** the coil arrangement (7) is energized differently in a steady state for moving to at least two magnetically stable drive positions of the actuating element (2).

14. Method according to Claim 13, **characterized in that** in order to move to at least two magnetically stable drive positions, the coils (8-11) of the coil arrangement (7) in a coil combination which is assigned to the respective drive position are energized in a steady state in an energization direction which is assigned to the respective drive position.

## Revendications

1. Serrure de véhicule automobile, comprenant un élément de commande (2) pouvant être déplacé autour d'un axe d'élément de commande (1) et un mécanisme d'entraînement (3) servant à déplacer l'élément de commande (2), le mécanisme d'entraînement (3) possédant un rotor (4) associé à l'élément de commande (2) ayant un arrangement d'aimants permanents (5) et un stator (6) ayant un arrangement de bobines (7) composé d'au moins deux bobines (8-11),
**caractérisée en ce**
**que** l'élément de commande (2) est un arbre de commande, en ce que le stator (6) possède au moins deux pôles (12-15) par le biais desquels est guidé un champ magnétique généré par l'arrangement de bobines (7), en ce qu'au moins un pôle (12-15) du stator (6) s'étend jusqu'à un entrefer (16, 17) sur un côté frontal (18, 19) du rotor (4), axial par rapport à l'axe d'élément de commande (1), éventuellement en fonction de la position du rotor (4), et en ce que l'élément de commande (2) peut gagner au moins deux positions d'entraînement magnétiquement stables par une alimentation électrique fixe différente de l'arrangement de bobines (7).

2. Serrure de véhicule automobile selon la revendication 1, **caractérisée en ce que** les pôles (12-15) s'étendent respectivement dans la direction axiale au niveau de deux côtés frontaux (18, 19) opposés du rotor (4) respectivement jusqu'à l'entrefer (16, 17) et bordent ainsi le rotor (4) des deux côtés.

3. Serrure de véhicule automobile selon la revendication 1 ou 2, **caractérisée en ce que** l'entrefer (16, 17) s'étend le long d'un plan d'entrefer, de préférence **en ce que** le plan d'entrefer s'étend perpendiculairement à l'axe d'élément de commande (1).

4. Serrure de véhicule automobile selon l'une des revendications précédentes, **caractérisée en ce qu'**une bobine (12-15) de l'arrangement de bobines (7) est associée à chaque pôle (12-15), de préférence **en ce que** chaque pôle (12-15) s'étend à travers la bobine (8-11) qui lui est associée.

5. Serrure de véhicule automobile selon l'une des revendications précédentes, **caractérisée en ce qu'**un arrangement conducteur (20) est présent, lequel couple magnétiquement l'un à l'autre au moins deux pôles (12-15) du stator (6), de préférence **en ce que** l'arrangement conducteur (20) est configuré sans tôle.

6. Serrure de véhicule automobile selon l'une des revendications précédentes, **caractérisée en ce que** l'arrangement d'aimants permanents (5) est magnétisé diamétralement ou axialement par rapport à l'axe d'élément de commande (1), de préférence **en ce que** l'arrangement d'aimants permanents (5) est de configuration allongée ou plate dans la direction de l'axe de magnétisation.

7. Serrure de véhicule automobile selon l'une des revendications précédentes, **caractérisée en ce que** l'élément de commande (2) est monté à rotation sur une partie porteuse différente du stator (6), notamment sur une partie de boîtier de la serrure de véhicule automobile au moyen d'un arrangement de palier (22), et **en ce que** le rotor (4)est monté à rotation exclusivement par le biais de l'arrangement de palier (22) de l'élément de commande (2), de préférence **en ce que** pour le montage, l'élément de commande (2) peut être mis en place sur le stator (6) conjointement avec le rotor (4).

8. Serrure de véhicule automobile selon l'une des revendications précédentes, **caractérisée en ce que** la serrure de véhicule automobile possède un mécanisme de serrure (23) qui peut être amené dans différents états fonctionnels tels que « verrouillé », « déverrouillé », « protégé contre le vol », « sécurité enfants verrouillée » et « sécurité enfants déverrouillée », au moins un élément fonctionnel (24) positionnable étant présent pour le réglage des différents états fonctionnels, l'arbre de commande (2) se trouvant ou pouvant être amené en prise technique d'entraînement avec l'élément fonctionnel (24) ou étant un élément constitutif de l'élément fonctionnel (24), de préférence **en ce que** l'élément fonctionnel (24) s'appuie sur une portion de commande (21) de l'arbre de commande (2).

9. Serrure de véhicule automobile selon l'une des revendications précédentes, **caractérisée en ce que** l'élément fonctionnel (24) est configuré en tant que fil métallique ou bande et peut être dévié dans différentes positions fonctionnelles, de préférence **en ce que** l'élément fonctionnel (24) est configuré en tant que fil métallique ou bande à flexibilité élastique et peut ainsi, en tant qu'élément fonctionnel flexible, être fléchi dans différentes positions fonctionnelles.

10. Serrure de véhicule automobile selon l'une des revendications précédentes, **caractérisée en ce que** l'arrangement de bobines (7) possède au moins deux, de préférence exactement deux, paires de bobines (8, 9 ; 10, 11) qui peuvent au moins également être excitées par paire, de préférence **en ce que** les deux bobines (8, *9* ; 10, 11) d'une paire de bobines sont branchées électriquement en série.

11. Serrure de véhicule automobile selon l'une des revendications précédentes, **caractérisée en ce qu'**au moins une bobine (8-11) de l'arrangement de bobines (7) est orientée avec son axe de bobine (8a-11a) parallèlement à l'axe d'élément de commande (1).

12. Serrure de véhicule automobile selon l'une des revendications précédentes, **caractérisée en ce qu'**au moins deux positions d'entraînement magnétiquement stables peuvent être atteintes par une alimentation électrique des bobines (8-11) de l'arrangement de bobines (7) dans une combinaison de bobines associée à la position d'entraînement respective dans une direction d'alimentation électrique associée à la position d'entraînement respective.

13. Procédé de commande d'une serrure de véhicule automobile selon l'une des revendications précédentes, **caractérisée en ce que** l'alimentation électrique fixe de l'arrangement de bobines (7) est effectué différemment pour atteindre au moins deux positions d'entraînement magnétiquement stables de l'élément de commande (2).

14. Procédé selon la revendication 13, **caractérisé en ce que** pour atteindre au moins deux positions d'entraînement magnétiquement stables, les bobines (8-11) de l'arrangement de bobines (7) sont alimentées électriquement de manière fixe dans une combinaison de bobines associée à la position d'entraînement respective dans une direction d'alimentation électrique associée à la position d'entraînement respective.
